# EUROPÄISCHE PATENTSCHRIFT

(11) **EP 4 169 598 B1**
(45) Veröffentlichungstag und Bekanntmachung des Hinweises auf die Patenterteilung: **04.09.2024**
(21) Anmeldenummer: 22202056.2
(22) Anmeldetag: 18.10.2022
(51) Int. Cl.: B01D 29/35, B01D 29/90, F02M 35/00, F15B 1/00, F15B 21/041, F15B 1/12

(54) **VORRICHTUNG BESTEHEND AUS EINER FILTEREINRICHTUNG UND EINER DÄMPFUNGSEINRICHTUNG**
APPARATUS COMPRISING A FILTERING DEVICE AND A DAMPING DEVICE
DISPOSITIF COMPRENANT UN DISPOSITIF DE FILTRAGE ET UN DISPOSITIF D'AMORTISSEMENT

(30) Priorität: 23.10.2021 DE 102021005288
(43) Veröffentlichungstag der Anmeldung: 26.04.2023
(73) Patentinhaber: RT-Filtertechnik GmbH, 88048 Friedrichshafen (DE)
(72) Erfinder: Martin, Markus Othmar, 78351 Bodman-Ludwigshafen (DE)
(74) Vertreter: Bartels und Partner, Patentanwälte

(56) Entgegenhaltungen:
- WO-A1-01/37965
- WO-A1-2017/025160
- DE-C- 944 405
- DE-U1- 202005 007 872
- JP-A- H0 658 302
- US-A- 4 721 563
- US-A1- 2007 181 481

## Beschreibung

Die Erfindung betrifft eine Vorrichtung mit den Merkmalen im Oberbegriff von Anspruch 1.

Durch DE 10 2015 000 418 A1 ist eine Dämpfungsvorrichtung bekannt, insbesondere zum Dämpfen oder Vermeiden von Druckstößen, wie Pulsationen, in hydraulischen Versorgungskreisläufen, mit einem einen Dämpfungsraum umgebenden Dämpfungsgehäuse, das mindestens einen Fluideinlass und einen Fluidauslass sowie ein im Strömungsweg zwischen diesen befindliches Dämpfungsrohr aufweist, das zur Bildung eines Helmholtz-Resonators in einem innerhalb seiner Länge gelegenen Bereich mindestens eine die Rohrwand durchgreifende, zu einem Helmholtz-Volumen innerhalb des Dämpfungsgehäuses führende Abzweigöffnung als Anschluss aufweist, wobei im zwischen Fluideinlass und Fluidauslass verlaufenden Strömungsweg innerhalb des Dämpfungsgehäuses ein Fluidfilter angeordnet ist.

Dergestalt kann eine gesonderte Filtereinrichtung, wie sie in Hydrosystemen in aller Regel aus Gründen der Betriebssicherheit unverzichtbar ist, in Wegfall geraten. Die Integration des Fluidfilters in das Dämpfungsgehäuse ermöglicht eine besonders kompakte Bauweise bei gleichzeitiger Erhöhung der Betriebssicherheit durch den Wegfall einer verbindenden Verrohrung zwischen Filter und Dämpfer, wodurch gleichzeitig auch eine Verringerung des gesamten Bauraumes erreicht ist.

In besonders vorteilhafter Weise ist bei der bekannten Lösung vorgesehen, unter Bildung einer Mehrzahl von Helmholtz-Resonatoren den Raum zwischen der Außenseite des Dämpfungsrohres und der Innenseite des Dämpfungsgehäuses in mehrere getrennte Kammern zu unterteilen, die jede über mindestens eine Abzweig- oder Anschlussöffnung in der Wand des Dämpfungsrohres mit dessen Innenraum verbunden ist. Dadurch ist die bekannte Dämpfungsvorrichtung gezielt auf die Dämpfung verschiedener Frequenzen einstellbar, was insbesondere bei im Hydrosystem befindlichen drehzahlvariablen Antrieben vorteilhaft ist, die einen großen Frequenzbereich als Anregungsspektrum von Schwingungen erzeugen. Insbesondere das Schaffen der Mehrzahl von Helmholtz-Resonatoren und deren Größenabstimmung im Hinblick auf die zu dämpfenden Einzelfrequenzen machen die bekannte Lösung aufwändig in der Herstellung und insbesondere bei der Dämpfung von niedrigfrequenten Fluidströmungen bei dennoch hohen Durchlaufmengen, wie sie beispielhaft im Betrieb eines Abbruchhammers für Bagger entstehen, hat sich die bekannte Lösung als wenig geeignet erwiesen.

Die JP H06-58302 A beschreibt eine Vorrichtung mit den Merkmalen im Oberbegriff von Anspruch 1 bestehend aus mindestens einer Filtereinrichtung und einer Dämpfungseinrichtung, die in einem Gehäuse zusammengefasst sind, das einen Zulauf für einen Unfiltratstrom aufweist, der über eine Fluidverbindung auf die Unfiltratseite der Filtereinrichtung gelangt, deren Filtratseite mit einem Ablauf im Gehäuse für den Ablauf eines Filtratstroms fluidführend verbunden ist, wobei die Dämpfungseinrichtung über einen Anschluss an die Fluidverbindung zur Unfiltratseite der Filtereinrichtung angeschlossen ist, wobei die Dämpfungseinrichtung einen Hydrospeicher aufweist, der mit seinem bewegbaren Trennelement zwei Fluidräume voneinander separiert, von denen ein Fluidraum der Aufnahme eines kompressiblen Mediums dient und der andere Fluidraum als Dämpfungsraum konzipiert über den Anschluss an die Fluidverbindung zur Unfiltratseite der Filtereinrichtung angeschlossen ist.

Weitere Vorrichtungen gehen aus der DE 944 405 C, der DE 20 2005 007 872 U1, der US 2007/0181481 A1, der US 4 721 563 A, der WO 2017/ 025160 A1 und der WO 01/37965 A1 hervor.

Ausgehend von diesem Stand der Technik liegt der Erfindung die Aufgabe zugrunde, die bekannte Lösung dahingehend weiter zu verbessern, dass in kostengünstiger Weise der Einsatzbereich für solche Vorrichtungen erweitert ist.

Eine dahingehende Aufgabe löst eine Vorrichtung mit den Merkmalen des Patentanspruches 1 in seiner Gesamtheit.

Gemäß dem Kennzeichen von Anspruch 1 ist vorgesehen, dass der Hydrospeicher ein Membranspeicher mit einer Trennmembran ist, die bei entleertem Dämpfungsraum den in einem Speichergehäuse eingebrachten Anschluss unter der Wirkung des kompressiblen Mediums verschließt.

Dadurch, dass gemäß dem kennzeichnenden Teil des Patentanspruches 1 die Dämpfungseinrichtung einen Hydrospeicher aufweist, der mit seinem bewegbaren Trennelement zwei Fluidräume voneinander separiert, von denen ein Fluidraum der Aufnahme eines kompressiblen Mediums dient und der andere Fluidraum als Dämpfungsraum konzipiert über den Anschluss an die Fluidverbindung zur Unfiltratseite der Filtereinrichtung angeschlossen ist, kann mit nur einem Dämpfungsraum nebst zugehöriger Anschlussstelle in kostengünstiger Weise eine verlässliche Dämpfungseinrichtung mit Filtereinrichtung geschaffen werden, die auch für niederfrequente Fluidströme und hohen Durchsatzmengen an zu behandelndem Fluid besonders geeignet ist. Hierzu trägt auch mit bei, wenn in besonders vorteilhafter Weise das Trennelement als elastomere Trennmembran ausgebildet unter der Wirkung des Fluidstroms elastisch nachgiebig ist. Insgesamt lässt sich eine solche Vorrichtung universell einsetzen und eine Vielzahl möglicher Anwendungsfälle abdecken.

Bei einer bevorzugten Ausführungsform der erfindungsgemäßen Vorrichtung ist vorgesehen, dass die Filtereinrichtung ein Filterelement aufweist, dessen Elementmaterial sich zwischen zwei Endkappen erstreckt und im Inneren des Gehäuses tauschbar aufgenommen zwischen Zulauf und Ablauf geschaltet ist. Dahingehende Filterelemente nebst zugehörigem Elementaufbau sind in einer Vielzahl von Ausführungsformen erhältlich und lassen sich in weitem Rahmen an die jeweilige Filtrationsaufgabe respektive an das zu filtrierende Fluid innerhalb der Vorrichtung gut anpassen.

Neben dem genannten Filterelement sind auch solche Membranspeicher in einer Vielzahl von Ausführungsformen erhältlich, so dass sich je nach Dämpfungsaufgabe ein geeigneter Membranspeicher finden lässt. Des Weiteren erlaubt die flexible Trennmembran, die das bewegbare Trennelement des Hydrospeichers bildet, eine rasche Anpassung an den jeweils zu dämpfenden Fluidstrom. Neben dem angesprochenen Dämpfungsverhalten lässt sich dergestalt auch eine Glättung im Frequenzverhalten für das Fluid, wie Hydrauliköl, erreichen.

Bei einer weiteren bevorzugten Ausführungsform der erfindungsgemäßen Vorrichtung ist vorgesehen, dass der Zulauf und der Ablauf quer zur Längsachse des Filterelements in das Gehäuse eingebracht sind und dass der Anschluss der Dämpfungseinrichtung sowie ein Fluideingang auf die innenliegende Unfiltratseite des Filterelements führend einander benachbart gegenüberliegend koaxial zur Längsachse des Filterelements verlaufend im Gehäuse angeordnet sind. Dergestalt erfolgt eine Umlenkung des Unfiltratstroms bezogen auf die Eingangsseite der Filtereinrichtung um 90°, wobei es zu einer nochmaligen 90°-Umlenkung kommt, sofern der Unfiltratstrom nach Durchqueren des Filterelementes in Richtung des Ablaufs dahingehend umgelenkt ist. Die dahingehenden Fluidumlenkungen haben sich im Rahmen des Betriebs der Vorrichtung als energetisch günstig erwiesen und führen zu einem verbesserten Dämpfungs- und Filtrationsergebnis.

Hierzu trägt in vorteilhafter Weise mit bei, dass der Zulauf im Gehäuse in einen Strömungsraum einmündet, der von Wandteilen des Gehäuses, der Dämpfungseinrichtung und der Filtereinrichtung begrenzt ist und der einen Abzweig bildet, der in der einen und der anderen gegenläufigen Richtung die Fluidzufuhr zum Anschluss der Dämpfungseinrichtung bzw. zum Fluideingang der Filtereinrichtung gleichermaßen ermöglicht.

Ferner spielt hierbei auch noch eine Rolle, dass der Zulauf in der aufrechten oder vertikalen Betriebsstellung der Vorrichtung oberhalb des Ablaufs verläuft, der auf die Filtratseite der Filtereinrichtung ausmündet, gebildet aus einem Ringraum zwischen dem Elementmaterial des Filterelements und einer benachbart gegenüberliegenden Begrenzungswand des Gehäuses.

Bei einer weiteren, besonders bevorzugten Ausführungsform der erfindungsgemäßen Vorrichtung ist vorgesehen, dass das Gehäuse ein Deckelteil aufweist, mit dessen Entfernen die Dämpfungseinrichtung aus dem Gehäuse mit entfernt ist, unter Freigabe einer Zugriffsöffnung zum Tauschen der Filtereinrichtung. Dergestalt lässt sich bei einem etwaigen Versagen des Trennelementes respektive der Trennmembran, der Membranspeicher rasch tauschen und im Übrigen kann, bei von partikulärer Verunreinigung zugesetztem Filterelement, dieses gegen ein Neuelement zeitnah getauscht werden.

Bei einer weiteren, besonders bevorzugten Ausführungsform der erfindungsgemäßen Vorrichtung ist vorgesehen, dass die Filtereinrichtung bodenseitig ein Bypassventil aufweist. Kommt es auf Grund der Abreinigung des Fluidstroms von partikulärer Verunreinigung zusehends zu einem "Verblocken" des Filterelementes, kann der Fluidstrom ungefiltert über das Bypassventil in den angeschlossenen Hydraulikkreis zurückgeführt werden, so dass es zu keinen Funktionsbeeinträchtigungen von Maschinen und Vorrichtungen kommt, die an den Hydraulikkreis angeschlossen sind.

Bei einer weiteren, bevorzugten Ausführungsform der erfindungsgemäßen Vorrichtung ist vorgesehen, dass an der Stelle des Fluideingangs der Filtereinrichtung eine Fluidführungseinrichtung vorhanden ist, die schachtartige Fluiddurchlässe bildet. Aufgrund der Fluidführungseinrichtung ist eine gleichmäßige Anströmung des Elementmaterials, regelmäßig in Form sogenannter Meshpacks, garantiert und eine Beschädigung der einzelnen Filterfalten während des Anströmvorganges und beim Durchströmen insoweit ausgeschlossen. Dergestalt ist auch ein vergleichmäßigter Schmutzeintrag in das Elementmaterial erreicht, was zu einer verbesserten Abreinigung des Unfiltrat- Fluidstroms von partikulären Verunreinigungen führt. Aufgrund der vergleichmäßigten Strömung beim Durchtritt des Elementmaterials sind dergestalt Strömungsverluste, beispielsweise hervorgerufen durch Turbulenz vermieden, so dass sich auch insoweit ein energetisch günstiger Betrieb ergibt.

Des Weiteren ist ein Filterelement beansprucht für eine Vorrichtung wie vorstehend angegeben, wobei das Filterelement tauschbar in dem Vorrichtungsgehäuse aufgenommen ist.

Filterelemente mit jeweils einem Elementmaterial, das eine Filtratseite von einer Unfiltratseite trennt und das zumindest an einer Zuströmseite für einen Unfiltratstrom mit einer Endkappe versehen ist, die eine Fluidführungseinrichtung aufweist, die über einzelne Stege voneinander getrennte Fluiddurchlässe aufweist, sind im Stand der Technik (DE 10 2007 046 209 A1) bekannt. Dadurch, dass gemäß dem kennzeichnenden Teil des Patentanspruches 9 aber die Fluidführungseinrichtung an zentraler Stelle der Endkappe angeordnet eine Fluidverbindung zwischen der Zuströmseite und der Unfiltratseite des Filterelementes herstellt, ist im Bereich einer Einlassendkappe am Filterelement die Vorrichtung mit zusätzlichen Strömungsführungen ausgestattet, so dass eine gleichmäßige Anströmung des Elementmaterials garantiert ist, was auch im Hinblick auf das Dämpfungsverhalten der Gesamtvorrichtung von Vorteil ist.

Im Folgenden wird die erfindungsgemäße Lösung anhand eines Ausführungsbeispiels nach der Zeichnung näher erläutert. Dabei zeigen in prinzipieller und nicht maßstäblicher Darstellung die
- Fig. 1: einen Längsschnitt durch die Vorrichtung als Ganzes; und

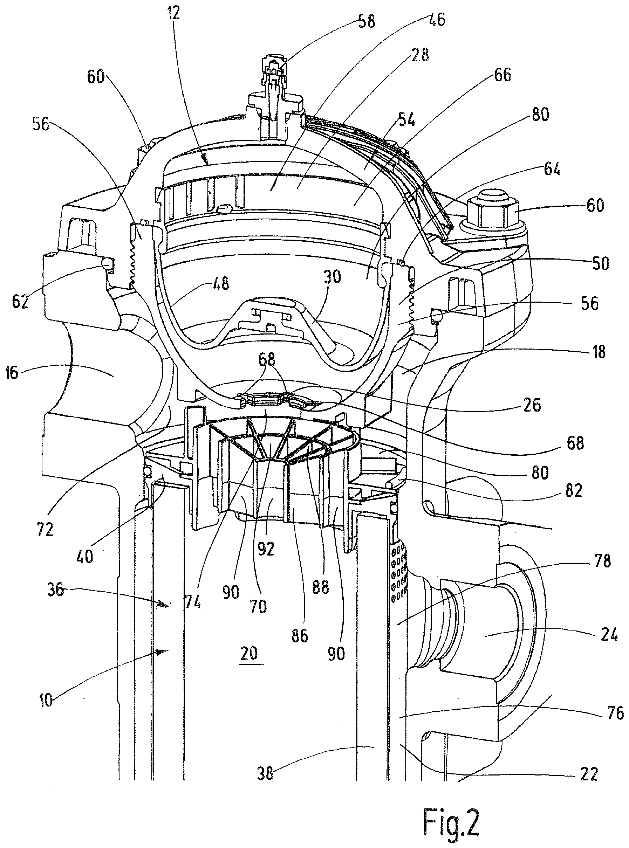

- Fig. 2: in vergrößerter Darstellung eine Längsschnittdarstellung des oberen Teils der Vorrichtung nach der Fig. 1.

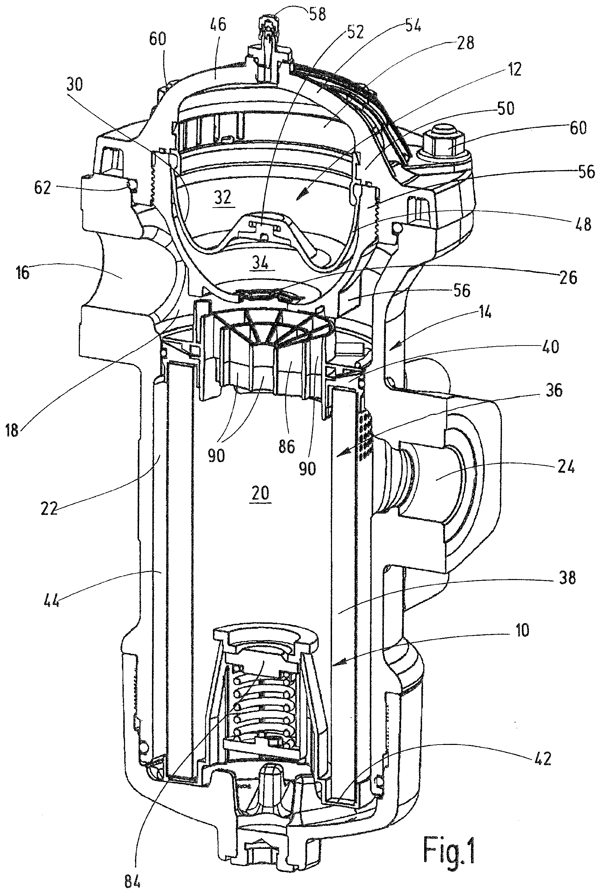

Wie die Fig. 1 zeigt, die die Vorrichtung als Ganzes betrifft, besteht diese aus einer Filtereinrichtung 10 und einer Dämpfungseinrichtung 12. Beide sind in einem Vorrichtungsgehäuse 14, das auch mehrteilig sein kann, in zusammengefasster Weise aufgenommen. Das Gehäuse 14 weist einen Zulauf 16 für einen Unfiltratstrom auf, der über eine Fluidverbindung 18 auf die sogenannte Unfiltratseite 20 der Filtereinrichtung 10 gelangt, deren Filtratseite 22 im Gehäuse 14 für den Ablauf eines Filtratstroms fluidführend mit einem Ablauf 24 im Gehäuse 14 verbunden ist. Dieser Filtratstrom wird durch die Abreinigung von partikulärer Verschmutzung aus dem Unfiltratstrom mittels der Filtereinrichtung 10 erhalten.

Des Weiteren weist die Vorrichtung als Ganzes die Dämpfungseinrichtung 12 auf, die über einen Anschluss 26 an die Fluidverbindung 18 zur Unfiltratseite 20 der Filtereinrichtung 10 angeschlossen ist. Die genannte Dämpfungseinrichtung 12 weist einen Hydrospeicher 28 auf, der mit seinem bewegbaren Trennelement 30 zwei Fluidräume 32, 34 voneinander separiert, von denen der eine Fluidraum 32 der Aufnahme eines kompressiblen Mediums dient, beispielsweise in Form von Stickstoffgas und der andere Fluidraum 34 ist als Dämpfungsraum konzipiert, der über den bodenseitigen Anschluss 26 an die Fluidverbindung 18 angeschlossen ist.

Wie sich des Weiteren aus der Fig. 1 ergibt, weist die Filtereinrichtung 10 ein Filterelement 36 auf, dessen Elementmaterial 38 sich in üblicher Bauweise für solche Filterelemente 36 zwischen einer oberen Endkappe 40 und einer unteren Endkappe 42 erstreckt. Insoweit ist das Filterelement 36 als handelbare Baueinheit im Inneren 44 des Gehäuses 14 tauschbar aufgenommen und in die Fluidverbindung zwischen Zulauf 16 und Ablauf 24 geschaltet. Der Hydrospeicher 28 ist ein Membranspeicher 46 mit einer Trennmembran 48, die das vorstehend beschriebene Trennelement 30 ausbildet.

Bei vollständig entleertem Dämpfungsraum 34 (nicht dargestellt) wird der in einem Speichergehäuse 50 eingebrachte Anschluss 26 unter der Wirkung des kompressiblen Mediums auf die Trennmembran 48 in dem einen Fluidraum 32 durch diese Trennmembran 48 verschlossen. Hierfür ist gemäß den Darstellungen auf der Unterseite der Trennmembran 48 ein massives Schließteil 52 eingebracht, insbesondere eingeknöpft. Auf der Unterseite ist das Schließteil 52 plattenförmig erweitert, so dass in der untersten Betriebsstellung der Trennmembran 48 bei vollständiger Auswölbung, das Schließteil 52 den Anschluss 26 am bodenseitigen Ende des Speichergehäuses 50 verschließt. Hierzu ist es notwendig, dass der Dämpfungsraum 34 vollständig von Fluid entleert ist, was beispielsweise dann der Fall ist, wenn die Vorrichtung außer Betrieb gesetzt ist. In der in den Figuren gezeigten einen von mehreren möglichen Betriebsstellungen ist hingegen die Trennmembran 48 mit dem Schließteil 52 in einer angehobenen, teilweise nach innen eingewölbten Position dargestellt und ist aufgrund der Gasvorspannung im ersten Fluidraum 32 in der Lage, auftretende Pulsationen im Fluidstrom über den Zulauf 16 zugeführt zu dämpfen, insbesondere zu glätten, wobei sich die erfindungsgemäße Dämpfungseinrichtung 12 besonders geeignet erwiesen hat, um niederfrequente Störungen auszugleichen.

Das Speichergehäuse 50 weist zwei kalottenartige Gehäuseteile 54, 56 auf, die miteinander verschraubt sind. Ferner weist das in Blickrichtung auf die Figuren gesehen obere Gehäuseteil 54 kopfseitig ein Verschlussteil 58 auf, über das im Bedarfsfall das kompressible Medium in den Fluidraum 32 nachfüllbar ist und das den Anschluss von Druckmessgeräten (nicht dargestellt) ermöglicht. Zum äußeren Rand hin ist das obere Gehäuseteil 54 flanschartig verbreitert und ist dort über Schraubverbindungen 60 an einer flanschartig sich gleichfalls entsprechend verbreiternden Stirnwand des Gehäuses 14 in lösbarer Weise festgelegt. Insoweit bildet das obere Gehäuseteil 54 ein Deckelteil aus, das mittels eines O-Dichtringes 62 gegenüber dem sonstigen Gehäuse 14 abgedichtet ist. Eine weitere Ringdichtung 64 befindet sich zwischen gegenüberliegenden Stirnseiten des oberen und unteren Deckelteils 54, 56. Die kalottenförmig ausgebildete Trennmembran 48 ist über einen Haltering 66 in üblicher Weise innerhalb des Speichergehäuses 50 festgelegt. Der Anschluss 26 im unteren Gehäuseteil 56 ist im Querschnitt gesehen im Wesentlichen kreisrund, wobei radial nach außen vorspringend einzelne Dämpfungsöffnungen 68 in der Art von Bohrungen eingebracht sind.

Sowohl der Zulauf 16 als auch der Ablauf 24 sind quer zur Längsachse des Filterelements 36 in das Gehäuse 14 eingebracht, wobei der Anschluss 26 der Dämpfungseinrichtung 12 sowie der Fluideingang 70 auf die innenliegende Unfiltratseite 20 des Filterelementes 36 führend, einander benachbart gegenüberliegend koaxial zur Längsachse des Filterelementes 36 verlaufend im Gehäuse 14 angeordnet sind. Der Zulauf 16 im Gehäuse 14 mündet in einen scheibenartigen Strömungsraum 72 ein, der von Wandteilen des Gehäuses 14, der Dämpfungseinrichtung 12, insbesondere in Form des unteren Gehäuseteils 56 sowie der Filtereinrichtung 10 begrenzt ist. Der dahingehende Strömungsraum 72 weist an zentraler Stelle, ausgehend von seiner Mitte, einen Abzweig 74 auf, der in der einen oberen und der anderen gegenläufigen, unteren Richtung die Fluidzufuhr zum Anschluss 26 der Dämpfungseinrichtung 12 beziehungsweise zum Fluideingang 70 der Filtereinrichtung 10 gleichermaßen ermöglicht, wobei die Volumina unterschiedlich aufgeteilt sein können. So besteht beispielsweise die Möglichkeit, über den Fluideingang 70 eine größere Fluidmenge auf die innere Unfiltratseite 20 dem Filterelement 36 zuzuführen, wohingegen eine geringere Menge über den unteren Anschluss 26 in den Dämpfungsraum 34 einströmen kann. Letztendlich wird die Aufteilung der Fluidmengen derart gewählt werden, dass je nach Menge und Frequenzmuster des einströmenden Unfiltratstroms eine verlässliche Dämpfung sowie ein gutes Filtrationsergebnis erreicht sind. Dies hat so keine Entsprechung im Stand der Technik.

Wie sich des Weiteren aus den Figuren ergibt, ist für den Erhalt von mehreren 90°-Umlenkungen des Fluidstroms der Zulauf 16 in der aufrechten Betriebsstellung der Vorrichtung oberhalb des Ablaufs 24 angeordnet, der auf die Filtratseite 22 der Filtereinrichtung 10 ausmündet, gebildet aus einem Ringraum 76 zwischen dem Elementmaterial 38 des Filterelements 36 und einer benachbart gegenüberliegenden Begrenzungswand des Gehäuses 14. Da das Filterelement 36 von dem abzureinigenden Fluidstrom von innen nach außen durchquert wird, kann zur Druckstabilisierung in üblicher Weise auf der Außenseite des Elementmaterials 38 ein perforiertes Stützrohr 78 vorgesehen sein. Nach Lösen der Schraubverbindungen 60 ist es möglich, das obere Deckelteil 54 abzunehmen, wobei dann insgesamt die Dämpfungseinrichtung 12 aus dem Gehäuse 14 entfernbar ist. Dergestalt ist über die obere freie Zugriffsöffnung 80 die Entnahme der Filtereinrichtung 10, insbesondere in Form des Filterelementes 36 ermöglicht, zwecks Austausch eines verbrauchten Filterelementes 36 gegen ein unverbrauchtes Neuelement. Für die dahingehende Entnahme des Filterelementes 36 kann dieses an seiner oberen Endkappe 40 ein in den Figuren nur teilweise dargestellter Bügel 82 dienen, der hochgestellt eine Handhabe bildet zwecks manuellem Tausch des Filterelementes 36.

Mit zunehmender Verschmutzung des Filterelementes 36 bis zu seinem vollständigen Verblocken kann in Abhängigkeit des hierdurch entstehenden Differenzdruckes ein bodenseitig am Filterelement 36 angeordnetes Bypassventil 84 mit federbelastetem Schließteil öffnen und dergestalt die Funktion eines an den Zulauf 16 sowie den Ablauf 24 angeschlossenen Hydraulickreislaufs (nicht dargestellt) sicherstellen.

Von besonderer Bedeutung ist, dass an der Stelle des Fluideingangs 70 eine Fluidführungseinrichtung 86 vorhanden ist, die schachtartige Fluiddurchlässe 88 bildet. Die dahingehende Fluidführungseinrichtung 86 stellt dabei eine fluidführende Verbindung von Seiten des Zulaufes 16 über den Strömungsraum 72 zur inneren Unfiltratseite 20 des Filterelementes 36 her.

In besonders vorteilhafter Weise ist vorgesehen, dass die Fluidführungseinrichtung 86 integraler Bestandteil der oberen Endkappe 40 ist; zwingend ist dies nicht. Vielmehr kann die Fluidführungseinrichtung 86 auch in der Form eines separaten Einsatzes auf die Oberseite der oberen Elementkappe 40 aufgesetzt sein. In jedem Fall weist die Fluidführungseinrichtung 86 einzelne Stege 90 auf, die die voneinander getrennten schachtartigen Fluiddurchlässe 88 begrenzen. Insbesondere weist die Fluidführungseinrichtung 86 strahlenartig von ihrer Mitte ausgehend in der Art eines Kranzes die einzelnen Stege 90 auf, die endseitig derart in Ringwandungen übergehen, dass die keilförmig nach außen sich erweiternden schachtartigen Fluiddurchlässe 88 gebildet sind. Vorzugsweise ist vorgesehen, dass die Summe der freien Querschnittsflächen aller Fluiddurchlässe 88 des äußeren Segmentes des Kranzes gleich oder im Wesentlichen gleich sind mit den freien Querschnittsflächen aller Fluiddurchlässe 88 des jeweils in der Reihe nachfolgenden inneren Kranzsegmentes.

Des Weiteren münden die Stege 90 in der Mitte in eine rohrartige Öffnung 92 aus, die an ihrem oberen Ende in den Strömungsraum 72 ausmündet und auf ihrer gegenüberliegenden Seite in den Innenraum des Filterelementes 36 übergeht, der einen Teil der Unfiltratseite 20 ausbildet. Durch die spezielle Ausgestaltung der Fluidführungseinrichtung 86 ist nicht nur eine gerichtete Fluidführung im Rahmen der Filtration für die Filtereinrichtung 10 erreicht, sondern vielmehr auch ein Beitrag geleistet für die angestrebte Dämpfung eines abzureinigenden Fluidstroms, der mit einer Frequenz versehen Pulsationen auf die Vorrichtung als Ganzes eingangsseitig ausübt, wobei der dahingehende Fluidstrom je nach Anwendungsfall auch zu hohen Fluidmengen auf der Eintragsseite der Vorrichtung führt. Die schachtartigen Fluiddurchlässe 88 und das Rohr 92 bilden einzelne Dämpfungskammern aus, die das Dämpfungsergebnis verbessern helfen.

## Patentansprüche

1. Vorrichtung bestehend aus mindestens einer Filtereinrichtung (10) und einer Dämpfungseinrichtung (12), die in einem Gehäuse (14) zusammengefasst sind, das einen Zulauf (16) für einen Unfiltratstrom aufweist, der über eine Fluidverbindung (18) auf die Unfiltratseite (20) der Filtereinrichtung (10) gelangt, deren Filtratseite (22) mit einem Ablauf (24) im Gehäuse (14) für den Ablauf eines Filtratstroms fluidführend verbunden ist, wobei die Dämpfungseinrichtung (12) über einen Anschluss (26) an die Fluidverbindung (18) zur Unfiltratseite (20) der Filtereinrichtung (10) angeschlossen ist, wobei die Dämpfungseinrichtung (12) einen Hydrospeicher (28) aufweist, der mit seinem bewegbaren Trennelement (30) zwei Fluidräume (32, 34) voneinander separiert, von denen ein Fluidraum (32) der Aufnahme eines kompressiblen Mediums dient und der andere Fluidraum (34) als Dämpfungsraum konzipiert über den Anschluss (26) an die Fluidverbindung (18) zur Unfiltratseite (20) der Filtereinrichtung (10) angeschlossen ist, **dadurch gekennzeichnet, dass** der Hydrospeicher (28) ein Membranspeicher (46) mit einer Trennmembran (48) ist, die bei entleertem Dämpfungsraum (34) den in einem Speichergehäuse (50) eingebrachten Anschluss (26) unter der Wirkung des kompressiblen Mediums verschließt.

2. Vorrichtung nach Anspruch 1, **dadurch gekennzeichnet, dass** die Filtereinrichtung (10) ein Filterelement (36) aufweist, dessen Elementmaterial (38) sich zwischen zwei Endkappen (40, 42) erstreckt und im Inneren (44) des Gehäuses (14) tauschbar aufgenommen zwischen Zulauf (16) und Ablauf (24) geschaltet ist.

3. Vorrichtung nach Anspruch 1 oder 2, **dadurch gekennzeichnet, dass** der Zulauf (16) und der Ablauf (24) quer zur Längsachse des Filterelements (36) in das Gehäuse (14) eingebracht sind und dass der Anschluss (26) der Dämpfungseinrichtung (12) sowie ein Fluideingang (70) auf die innenliegende Unfiltratseite (20) des Filterelements (36) führend einander benachbart gegenüberliegend koaxial zur Längsachse des Filterelements (36) verlaufend im Gehäuse (14) angeordnet sind.

4. Vorrichtung nach Anspruch 3, **dadurch gekennzeichnet, dass** der Zulauf (16) im Gehäuse (14) in einen Strömungsraum (72) einmündet, der von Wandteilen des Gehäuses (14), der Dämpfungseinrichtung (12) und der Filtereinrichtung (10) begrenzt ist und der einen Abzweig (74) bildet, der in der einen und der anderen gegenläufigen Richtung die Fluidzufuhr zum Anschluss (26) der Dämpfungseinrichtung (12) bzw. zum Fluideingang (70) der Filtereinrichtung (110) gleichermaßen ermöglicht.

5. Vorrichtung nach einem der vorstehenden Ansprüche, **dadurch gekennzeichnet, dass** der Zulauf (16) in der aufrechten Betriebsstellung der Vorrichtung oberhalb des Ablaufs (24) verläuft, der auf die Filtratseite (22) der Filtereinrichtung (10) ausmündet, gebildet aus einem Ringraum (76) zwischen dem Elementmaterial (38) des Filterelements (36) und einer benachbart gegenüberliegenden Begrenzungswand des Gehäuses (14).

6. Vorrichtung nach einem der vorstehenden Ansprüche, **dadurch gekennzeichnet, dass** das Gehäuse (14) ein Deckelteil (54) aufweist, mit dessen Entfernen die Dämpfungseinrichtung (12) aus dem Gehäuse (14) mit entfernt ist, unter Freigabe einer Zugriffsöffnung (80) zum Tauschen der Filtereinrichtung (10).

7. Vorrichtung nach einem der vorstehenden Ansprüche, **dadurch gekennzeichnet, dass** die Filtereinrichtung (10) bodenseitig ein Bypassventil (84) aufweist.

8. Vorrichtung nach einem der Ansprüche 3 bis 7, **dadurch gekennzeichnet, dass** an der Stelle des Fluideingangs (70) der Filtereinrichtung (10) eine Fluidführungseinrichtung (86) vorhanden ist, die schachtartige Fluiddurchlässe (88) bildet.

9. Filterelement, insbesondere vorgesehen für den Einsatz in einer Filtervorrichtung nach einem der vorstehenden Ansprüche, mit einem Elementmaterial (38), das eine Filtratseite (22) von einer Unfiltratseite (20) trennt und das zumindest an einer Zuströmseite für einen Unfiltratstrom mit einer Endkappe (40) versehen ist, die eine Fluidführungseinrichtung (86) aufweist, die über einzelnen Stege (90) voneinander getrennte Fluiddurchlässe (88) aufweist, **dadurch gekennzeichnet, dass** die Fluidführungseinrichtung (86) an zentraler Stelle der Endkappe (40) angeordnet eine Fluidverbindung zwischen der Zuströmseite und der Unfiltratseite (20) herstellt.

## Claims

1. Apparatus consisting of at least one filter device (10) and one damping device (12), which are combined in a housing (14) that has an inlet (16) for an unfiltered medium flow which reaches the unfiltered medium side (20) of the filter device (10) via a fluid connection (18), the filtrate side (22) of which filter device is connected in a fluid-conducting manner to an outlet (24) in the housing (14) for the outlet of a filtrate flow, wherein the damping device (12) is connected to the unfiltered medium side (20) of the filter device (10) via a connector (26) to the fluid connection (18), wherein the damping device (12) has a hydraulic accumulator (28) which, with its movable separating element (30), separates two fluid chambers (32, 34) from each other, of which one fluid chamber (32) is used to hold a compressible medium and the other fluid chamber (34), designed as a damping chamber, is connected to the unfiltered medium side (20) of the filter device (10) via the connector (26) to the fluid connection (18), **characterised in that** the hydraulic accumulator (28) is a diaphragm accumulator (46) with a separating membrane (48) which, when the damping chamber (34) is emptied, closes the connector (26) inserted in an accumulator housing (50) under the action of the compressible medium.

2. Apparatus according to claim 1, **characterised in that** the filter device (10) has a filter element (36), the element material (38) of which extends between two end caps (40, 42) and is replaceably accommodated in the interior (44) of the housing (14) between the inlet (16) and the outlet (24).

3. Apparatus according to claim 1 or 2, **characterised in that** the inlet (16) and the outlet (24) are introduced into the housing (14) transverse to the longitudinal axis of the filter element (36) and **in that** the connector (26) of the damping device (12) and a fluid inlet (70), leading to the internal unfiltered medium side (20) of the filter element (36), are arranged in the housing (14) adjacent to and opposite each other, running coaxial with the longitudinal axis of the filter element (36).

4. Apparatus according to claim 3, **characterised in that** the inlet (16) in the housing (14) opens into a flow chamber (72), which is bounded by wall parts of the housing (14), the damping device (12) and the filter device (10) and which forms a branch (74), which enables the fluid supply to the connector (26) of the damping device (12) or to the fluid inlet (70) of the filter device (110) in the one and the other opposite direction in equal measure.

5. Apparatus according to one of the preceding claims, **characterised in that**, in the upright operating position of the apparatus, the inlet (16) extends above the outlet (24), which opens out on the filtrate side (22) of the filter device (10), formed of an annular space (76) between the element material (38) of the filter element (36) and an adjacent opposing boundary wall of the housing (14).

6. Apparatus according to one of the preceding claims, **characterised in that** the housing (14) has a cover part (54), with the removal of which the damping device (12) is also removed from the housing (14), releasing an access opening (80) for replacing the filter device (10).

7. Apparatus according to one of the preceding claims, **characterised in that** the filter device (10) has a bypass valve (84) on the bottom.

8. Apparatus according to one of claims 3 to 7, **characterised in that** a fluid guiding device (86), which forms shaft-like fluid passages (88), is present at the location of the fluid inlet (70) of the filter device (10).

9. Filter element, in particular intended for use in a filter apparatus according to one of the preceding claims, having an element material (38) which separates a filtrate side (22) from an unfiltered medium side (20) and which is provided, at least on an inflow side for an unfiltered medium flow, with an end cap (40) which has a fluid guiding device (86), which has fluid passages (88) separated from one another via individual webs (90), **characterised in that** the fluid guiding device (86), arranged in a central location of the end cap (40), establishes a fluid connection between the inflow side and the unfiltered medium side (20).

## Revendications

1. Installation constituée d'au moins un dispositif (10) de filtration et d'un dispositif (12) d'amortissement rassemblés dans une enveloppe (14), qui a une arrivée (16) pour un courant de non filtrat, qui parvient par une communication (18) fluidique au côté (20) de non filtrat du dispositif (10) de filtration, dont le côté (22) de filtrat communique fluidiquement avec une évacuation (24) de l'enveloppe (14) pour l'évacuation du courant de filtrat, dans laquelle le dispositif (12) d'amortissement est raccordé par un raccord (26) à la communication (18) fluidique du côté (20) de non filtrat du dispositif (10) de filtration, dans laquelle le dispositif (12) d'amortissement a un accumulateur (28) hydraulique qui, par son élément (30) de séparation mobile, sépare l'un de l'autre deux espaces (32, 34) pour du fluide, dont l'un (32) sert à la réception d'un milieu compressible, tandis que l'autre (34), conçu en espace d'amortissement, est raccordé par le raccord (26) à la communication (18) fluidique du côté (20) du non filtrat du dispositif (10) de filtration, **caractérisée en ce que** l'accumulateur (28) hydraulique est un accumulateur (46) à membrane ayant une membrane (48) de séparation qui, lorsque l'espace (34) d'amortissement est vidé, ferme, sous l'action du milieu compressible, le raccord (26) ménagé dans une enveloppe (50) de l'accumulateur.

2. Installation suivant la revendication 1, **caractérisée en ce que** le dispositif (10) de filtration a un élément (36) filtrant, dont la matière (38) de l'élément s'étend entre deux coiffes (40, 42) d'extrémité et, en étant reçue de manière remplaçable à l'intérieur (44) de l'enveloppe (14), est monté entre l'arrivée (16) et l'évacuation (24).

3. Installation suivant la revendication 1 ou 2, **caractérisée en ce que** l'arrivée (16) et l'évacuation (24) sont ménagées transversalement à l'axe longitudinal de l'élément (36) filtrant dans l'enveloppe (14) et **en ce que** le raccord (26) du dispositif (12) d'amortissement ainsi qu'une entrée (70) de fluide, du côté (20) de non filtrat à l'intérieur de l'élément (36) filtrant, sont disposés dans l'enveloppe (14) en passant en étant voisins l'un de l'autre en s'étendant de manière opposée coaxialement à l'axe longitudinal de l'élément (36) filtrant.

4. Installation suivant la revendication 3, **caractérisée en ce que** l'arrivée (16) débouche dans l'enveloppe (14) dans un espace (72) d'écoulement, qui est délimité par des parties de paroi de l'enveloppe (14), du dispositif (12) d'amortissement et du dispositif (10) de filtration et qui forme une dérivation (74), qui rend possible, dans un sens et dans l'autre contraire, l'apport de fluide au raccord (26) du dispositif (12) d'amortissement et respectivement à l'entrée (70) de fluide du dispositif (10) de filtration de la même façon.

5. Installation suivant l'une des revendications précédentes, **caractérisée en ce que** l'arrivée (16) s'étend, dans la position de fonctionnement verticale de l'installation, au-dessus de l'évacuation (24), qui débouche du côté (22) du filtrat du dispositif (10) de filtration, en étant formée d'un espace (76) annulaire entre la matière (38) de l'élément (36) filtrant et une paroi de démarcation opposée voisine de l'enveloppe (14).

6. Installation suivant l'une des revendications précédentes, **caractérisée en ce que** l'enveloppe (14) a une partie (54) formant couvercle, dont le retrait permet de retirer le dispositif (12) d'amortissement de l'enveloppe (14) en dégageant une ouverture (80) d'accès pour l'échange du dispositif (10) de filtration.

7. Installation suivant l'une des revendications précédentes, **caractérisée en ce que** le dispositif (10) de filtration a du côté du fond une soupape (84) de dérivation.

8. Installation suivant l'une des revendications 3 à 7, **caractérisée en ce qu'**au lieu de l'entrée (70) pour du fluide du dispositif (10) de filtration, il est prévu un dispositif (86) de conduite de fluide, qui forme des passages (88) pour du fluide de type en puits.

9. Elément filtrant, prévu en particulier pour être utilisé dans une installation de filtration suivant l'une des revendications précédentes, comprenant une matière (38) d'élément, qui sépare un côté (22) de filtrat d'un côté (20) de non filtrat et qui est pourvue, à un côté d'afflux d'un courant de non filtrat, d'une coiffe (40) d'extrémité, qui a un dispositif (86) de conduite de fluide, lequel a des traversées (88) pour du fluide séparées les unes des autres par diverses entretoises (90), **caractérisé en ce que** le conduit (86) de conduite de fluide ménage, disposé en un point central de la coiffe (40) d'extrémité, une communication fluidique entre le côté d'afflux et le côté (20) de non filtrat.
